# EUROPEAN PATENT APPLICATION

(11) **EP 2 222 046 A1**
(43) Date of publication of application: **25.08.2010**
(21) Application number: 08852787.4
(22) Date of filing: 04.11.2008
(51) Int. Cl.: H04L 29/06

(54) **METHOD AND DEVICE FOR IDENTIFYING AND OBTAINING AUTHORITY INFORMATION IN SDP PROTOCOL**

(30) Priority: 21.11.2007 CN 200710187509
(71) Applicant: Huawei Technologies Co., Ltd., Longgang District, Shenzhen Guangdong 518129 (CN)
(72) Inventor: ZHONG, Jianfeng, Guangdong 518129 (CN); PENG, Zhaojun, Guangdong 518129 (CN); WANG, Feng, Guangdong 518129 (CN)
(74) Representative: Barth, Stephan Manuel
(86) International application number: PCT/CN2008/072922
(87) International publication number: WO 2009/065339

(57) **Abstract**

A method and a device for identifying and obtaining authority information in a session description protocol (SDP) are provided. The method for identifying the authority information includes: identifying an authority attribute of a multicast service in an attribute portion of an attribute row, and identifying the authority information of the multicast service corresponding to the authority attribute in an attribute value portion of the attribute row. The method for obtaining the authority information includes: parsing an SDP message to obtain an attribute row or a group attribute row in the SDP message; and obtaining the authority information from the attribute row or the group attribute row.

## Description

The application claims the benefit of priority to China Patent Application No. 200710187509.1, filed on November 21, 2007 and entitled "METHOD AND DEVICE FOR IDENTIFYING AND OBTAINING AUTHORITY INFORMATION IN SDP PROTOCOL", which is incorporated herein by reference in its entirety.

### BACKGROUND OF THE INVENTION

### Field of the Technology

The present invention relates to the field of communication technique, and more particularly to a method and a device for identifying and obtaining authority information in a session description protocol (SDP) protocol.

### Background of the Invention

In the mobile communication, the Internet protocol (IP) multimedia subsystem (IMS) is a subsystem overlaid on an existing packet switched domain in the wideband code division multiple access (WCDMA) network added in the R5 stage of the third generation partnership project (3GPP), in which the packet switched domain is adopted as a bearer channel for the upper layer control signaling and media transmission, and the Session Initiation Protocol (SIP) is introduced as a service control protocol. As the SIP has features of being simple, extensible, and convenient in media combination, the SIP provides abundant multimedia services by separating the service control from the bearer control. The whole framework of the IMS mainly includes a call session control function (CSCF), adapted to provide the controlling of subscriber registration, session control, and other functions; an application server (AS), adapted to provide various service logic control functions; a home subscriber server (HSS), adapted to concentratedly manage the subscriber subscription data; and a media gateway control function (MGCF) or an IP multimedia media gateway (IM-MGW), adapted to implement the interworking with the circuit switched network.

The subscriber accesses the IMS through a proxy-CSCF (P-CSCF) serving as a proxy node in the current location, and finishes the session and service triggering control and the interaction with AS service control through a serving-CSCF (S-CSCF) serving as a serving node of the home domain in the subscriber registration location.

Based on the whole framework of the IMS, currently, an IP television (IPTV) streaming media service is provided. In the IPTV streaming media service, multimedia files including audio and video are transmitted on the packet switched network by using the streaming transmission technique. During the practical application, through the streaming transmission technique, the service provider offers the processed continuous video and/or the audio content in a corresponding web server in advance, and the subscriber may download a multimedia file from the server while watching and listening to the multimedia file, such that the subscriber is enabled to watch and listen to the corresponding multimedia content even if the whole file is not downloaded to the local terminal completely. In the IPTV streaming media service provided based on the whole framework of the IMS, the registering, authenticating, routing, session control and establishment, service triggering, charging, and end-to-end quality of service (QoS) ensuring mechanisms in the IMS network are fully utilized, so as to provide the streaming media service and the multimedia service with streaming media and real-time session service converged together for subscribers. That is to say, the session between the subscriber terminal and the server that saves corresponding content is finished by the existing session control mechanisms of the IMS. Meanwhile, during the session establishment process, the bearing resource for transmitting the media stream must be reserved.

In the IPTV streaming media service, one of the typical services is broadcast TV (BC) service. In the BC service, for all subscribers watching the same program, the program contents received at a certain time point are completely the same. Based on this feature, during the process of implementing the BC service, the media stream is transmitted in a multicast manner on the bearer layer, so as to reduce the occupied network bandwidth. As the BC service realizes the transmission in the multicast manner, when the BC service is established, a resource and admission control subsystem (RACS) needs to know an authority of the BS service of the subscriber. Thus, when the subscriber subsequently initiates the channel switching, the RACS is enabled to perform corresponding control according to the obtained authority of the subscriber.

In the prior art, the authority of the subscriber may be identified in the following manner.

The authority of the subscriber is identified by adopting media (m) rows for representing media contents in the SDP protocol, that is, the information of all channels which the subscriber is authorized to watch, needs to be listed one by one by using media rows "m=" rows.

For example, the subscriber is authorized to watch the programs from channel 1 to channel 5, and each channel includes two media (audio and video) components. The information of channels which the subscriber is authorized to watch needs to be identified by 10 "m=" rows in the SDP.

In this manner, the authority of the subscriber is identified in the m rows for representing media contents, so that the SIP message is too long, the process of identifying and obtaining the authority of the subscriber is too complicated, and as a result, an implementation efficiency of the solution is rather low.

### SUMMARY OF THE INVENTION

Accordingly, the present invention is directed to a method and a device for identifying and obtaining authority information in an SDP protocol, applicable to identify and obtain the authority information without making an SIP message become too long.

The present invention provides the following solutions.

A method for identifying authority information in an SDP protocol is provided, which includes the following steps.

An authority attribute of a multicast service is identified in an attribute portion of an attribute row, and authority information of the multicast service corresponding to the authority attribute is identified in an attribute value portion of the attribute row.

A method for identifying authority information in an SDP protocol is provided, which includes the following steps.

An authority attribute of a multicast service is identified in semantics of a group attribute row, and authority information of the multicast service corresponding to the authority attribute is identified in an identification-tag corresponding to the semantics.

A method for identifying authority information in an SDP protocol is provided, which includes the following steps.

Service packet identifying information of a multicast service is identified in semantics of a group attribute row, and service identifying information corresponding to the service packet identifying information is identified in an identification-tag corresponding to the semantics.

A method for obtaining authority information in an SDP protocol is provided, which includes the following steps.

An SDP message is parsed to obtain an attribute row or a group attribute row in the SDP message.

The authority information is obtained from the attribute row or the group attribute row.

A device for obtaining authority information in an SDP protocol is provided, which includes a parsing unit and an authority information obtaining unit.

The parsing unit is adapted to parse an SDP message to obtain an attribute row or a group attribute row in the SDP message.

The authority information obtaining unit is adapted to obtain the authority information from the attribute row or the group attribute row.

In the method and the device according to the embodiments of the present invention, authority information is identified in an attribute row of the SDP, without carrying additional "m=" row information irrelevant to the current service request, so as to effectively avoid the problem that the SIP message is too long because the authority information is identified in the media rows, thereby conveniently identifying the authority information in a highly efficient manner.

### BRIEF DESCRIPTION OF THE DRAWINGS

FIG. 1 is a flow chart of a method for obtaining authority information according to an embodiment of the present invention;

FIG. 2 is a flow chart of a method for obtaining authority information according to another embodiment of the present invention;

FIG. 3 is a flow chart of a method for obtaining authority information according to still another embodiment of the present invention; and

FIG. 4 is a schematic view of a device for obtaining authority information according to an embodiment of the present invention.

### DETAILED DESCRIPTION OF THE EMBODIMENTS

A detailed description of embodiments of the present invention is given in the following by reference to accompanying drawings.

I. A method for identifying authority information

(I) The authority information is identified by adopting an attribute row "a=".

In an embodiment of the present invention, the authority information is identified by adopting an attribute row "a=" in an SDP.

Particularly, an authority attribute of a multicast service is identified in an attribute portion of the attribute row, and authority information of the multicast service corresponding to the authority attribute is identified in an attribute value portion of the attribute row.

In order to have a further understanding of the method, the implementation of the method is described as follows by citing specific examples.

During the specific application, a specific form of the attribute row is a=<attribute>: <value>.

After the authority information is identified in the attribute row by using the method according to the embodiment of the present invention, an authority attribute row is obtained. In the embodiment according to the present invention, the authority attribute of the multicast service, for example, IPTV or BC, is identified by adopting the attribute portion (attribute) of the attribute row, in which the attribute may be a character set, and may also be a number or other forms, which does not affect the implementation of the embodiment of the present invention. The authority information is identified by adopting the attribute value portion (value) of the attribute row, and the value may be any of service packet identifying information and service identifying information or a combination thereof, in which there can be information about one or more service packet identifiers or information about one or more service identifiers. The service packet identifier or the service identifier may be a number, a universal resource locator (URL), a universal resource identifier (URI), a multicast address, a character set, or other forms. For the BC service, the service identifying information may be specific channel information, which is mostly represented by adopting a channel identifier. In the following, by setting the authority attribute as "authorization attribute" for example, different forms of identifying the authority information by using the value are respectively described.

1. The value is one or a group of service identifying information.

In this embodiment, after the authority information is identified by adopting the method according to the embodiment of the present invention, the obtained authority attribute row may particularly be a= auth: channel1 channel2.

In the authority attribute row, the "auth" represents that the authority attribute is the authorization attribute, and the corresponding authority information includes a channel 1 and a channel 2. The authority attribute row represents that an authorization subscriber is authorized to watch programs of the channel 1 and the channel 2. Definitely, there may be one or more service identifiers in the authority information, and a representation form of the authority information is not limited to the channel identifier, but may be a multicast address or other forms, which does not affect the implementation of the embodiment of the present invention.

2. The value is one or a group of service packet identifying information.

In this embodiment, after the authority information is identified by adopting the method according to the embodiment of the present invention, the obtained authority attribute row may particularly be a= auth: SP1 SP2.

In the authority attribute row, the "auth" represents that the authority attribute is the authorization attribute, and the corresponding authority information includes a service packet 1 and a service packet 2. The authority attribute row represents that an authorization subscriber is authorized to watch programs of all channels in the service packet 1 and the service packet 2. Definitely, there may be one or more service packet identifiers, and the service packets which the subscriber is authorized to watch may be represented by other forms besides the service packet identifiers.

3. The value is a combination of the service packet identifying information and the service identifying information.

In this embodiment, after the authority information is identified by adopting the method according to the embodiment of the present invention, the obtained authority attribute row may particularly be a= auth: SP1 channel1 channe12,SP2 channel1 channel2.

In the authority attribute row, the "auth" represents that the authority attribute is the authorization attribute, and the corresponding authority information includes a channel 1 and a channel 2 in a service packet 1, and a channel 1 and a channel 2 in a service packet 2. The authority attribute row represents that an authorization subscriber is authorized to watch programs of the channel 1 and the channel 2 in the service packet 1, and the channel 1 and the channel 2 in the service packet 2. There may be one or more service identifiers corresponding to one service packet, or one or more combinations of the service packet identifier and the service identifier. Furthermore, the representation form of the service identifying information is not limited to the channel identifier, but may be a multicast address or other forms, and the service packet identifying information may be represented in other forms besides the service packet identifier, which does not affect the implementation of the embodiment of the present invention.

In this embodiment, the following points need to be noted.

(1) When the authority information is identified, besides listing the corresponding service packet identifying information and/or the service identifying information one by one in the above manner, the authority information may be identified in a list or other exemplifying manners.

(2) In this embodiment, the information exemplified in the authority information is information of the services which the subscriber is allowed to watch. During the practical application, it is possible that the subscriber is authorized to watch a plurality of services, and the quality of the services which the subscriber is authorized to watch may be quite large. In this case, the authority information of the subscriber is represented in a manner of excluding the services which the subscriber is not authorized to watch, thereby reducing a length of the authority information. For example, when a certain subscriber is authorized to watch the programs of all channels except the channel 1 and the channel 2, the authority information thereof may be identified in the following manner of a= auth: exclude channel1 channel2.

Definitely, in order to more accurately identify the authority information, a name of a corresponding set may be added in the identifying process, for example, when a certain subscriber is authorized to watch the programs of all channels except the channel 1 and the channel 2, the authority information thereof may be identified in the following manner of a= auth: SP1 exclude channel1 channel2.

The above-mentioned identifying manners are only intended to describe the embodiment of the present invention, without limiting the scope of the embodiment of the present invention.

(3) When the authority information includes a plurality of service identifying information and/or service packet identifying information, the authority information may be identified in a simplified manner. Taking a plurality of service identifying information as an example, after the authority information is identified in the simplified manner, the obtained authority attribute row is a= auth:channel1-channel3, channel4, channel6-channel10.

The authority information in the authority attribute row includes channels from channel 1 to channel 3, channel 4, and channels from channel 6 to channel 10, which represents that the subscriber is authorized to watch programs of channels from the channel 1 to the channel 3, the channel 4, and channels from the channel 6 to the channel 10.

(II) The authority information is identified by adopting a group attribute row "a=group:"

In the above embodiment, the authority information is identified by adopting the attribute row "a=". In another embodiment of the present invention, the authority information is identified by adopting the group attribute row "a=group:".

An authority attribute of a multicast service is identified in semantics of a group attribute row, and authority information of the multicast service corresponding to the authority attribute is identified in an identification-tag corresponding to the semantics.

During the specific application, a specific form of the group attribute row is group-attribute = "a=group:" semantics *(space identification-tag).

After the authority information is identified in the group attribute row by adopting the method according to the embodiment of the present invention, a group authority attribute row is obtained. In the embodiment according to the present invention, the authority attribute is identified by adopting the semantics, in which the semantics may be a character set or other forms. The authority information is identified by adopting the identification-tag. The authority identifying information may be any one of service packet identifying information and service identifying information or a combination thereof, in which there can be information about one or more service packet identifiers, or information about one or more service identifiers. The service packet identifier or the service identifier may be a number, a URL, a URI, a multicast address, a character set, or other forms. In the following, by setting the semantics as the "authorization attribute" for example, different forms of identifying the authority information by using the identification-tag are respectively described.

1. The identification-tag is one or a group of service identifying information.

In this embodiment, after the authority information is identified by adopting the method according to the embodiment of the present invention, the obtained group authority attribute row may particularly be a= group: auth channel1 channel2.

In the group authority attribute row, the "auth" represents that the authority attribute is the authorization attribute, and the corresponding authority information includes a channel 1 and a channel 2. The group authority attribute row represents that an authorization subscriber is authorized to watch programs of the channel 1 and the channel 2. Definitely, there may be one or more service identifiers in the authority information, and the representation form of the authority information is not limited to the channel identifier, but may be a multicast address or other forms, which does not affect the implementation of the embodiment of the present invention.

2. The identification-tag is one or a group of service packet identifying information.

In this embodiment, after the authority information is identified by adopting the method according to the embodiment of the present invention, the obtained group authority attribute row may particularly be a= group: auth SP1 SP2.

In the group authority attribute row, the "auth" represents that the authority attribute is the authorization attribute, and the corresponding authority information includes a service packet 1 and a service packet 2. The group authority attribute row represents that an authorization subscriber is authorized to watch programs of all channels in the service packet 1 and the service packet 2. Definitely, there may be one or more service packet identifiers, and the service packets which the subscriber is authorized to watch may be represented by other forms besides the service packet identifiers.

3. The identification-tag is a combination of the service packet identifying information and the service identifying information.

In this embodiment, after the authority information is identified by adopting the method according to the embodiment of the present invention, the obtained group authority attribute row may particularly be a= group: auth SP1 channel1 channel2,SP2 channel1 channel2.

In the group authority attribute row, the auth represents that the authority attribute is the authorization attribute, and the corresponding authority information includes a channel 1 and a channel 2 in a service packet 1, and a channel 1 and a channel 2 in a service packet 2. The group authority attribute row represents that an authorization subscriber is authorized to watch programs of the channel 1 and the channel 2 in the service packet 1, and the channel 1 and the channel 2 in the service packet 2. One or more service identifiers may be corresponding to one service packet, or there may be one or more combinations of the service packet identifier and the service identifier. Furthermore, the representation form of the service identifying information is not limited to the channel identifier, but may be a multicast address or other forms, and the service packet identifying information may be represented in other forms besides the service packet identifier, which does not affect the implementation of the embodiment of the present invention.

In this embodiment, the following points need to be noted.

(1) When the authority information is identified, besides listing the corresponding service packet identifying information and/or the service identifying information one by one in the above manner, the authority information may be identified in a list or other exemplifying manners.

(2) In this embodiment, the information exemplified in the authority information is information of the services which the subscriber is allowed to watch. During the practical application, it is possible that the subscriber is authorized to watch a plurality of services, and the quality of the services which the subscriber is authorized to watch may be quite large. In this case, the authority information of the subscriber is represented in a manner of excluding the services which the subscriber is not authorized to watch, thereby reducing a length of the authority information. For example, when a certain subscriber is authorized to watch programs of all channels except the channel 1 and the channel 2, the authority information thereof may be identified in the following manner of a= group: auth exclude channel1 channel2.

Definitely, in order to more accurately identify the authority information, a name of a corresponding set may be added in the identifying process, for example, when a certain subscriber is authorized to watch the programs of all channels in the service packet 1 except the channel 1 and the channel 2, the authority information thereof may be identified in the following manner of a= group: auth SP1 exclude channel1 channel2.

(3) When the authority information includes a plurality of service identifying information and/or service packet identifying information, the authority information may be identified in a simplified manner. Taking a plurality of service identifying information as an example, after the authority information is identified in the simplified manner, the obtained group authority attribute row is a= group: auth channel1-channel3, channel4, channel6-channel10.

The authority information in the group authority attribute row includes channels from channel 1 to channel 3, channel 4, and channels from channel 6 to channel 10, which represents that the subscriber is authorized to watch programs of channels from the channel 1 to the channel 3, the channel 4, and channels from the channel 6 to the channel 10.

The above-mentioned identifying manners are only intended to describe the embodiments of the present invention, without limiting the scope of the embodiments of the present invention.

In the above embodiments, the description is given by taking the authority attribute as authorization attribute for example. In other embodiments of the present invention, the authority attribute may be a prohibited attribute, which represents that the subscriber is prohibited to use multicast services corresponding to the authority information, or a restricted attribute, which represents that the subscriber is authorized to use the multicast services corresponding to the authority information under a situation of satisfying a certain restricted condition. The prohibited attribute and the restricted attribute may be respectively represented by corresponding characters or other forms. Definitely, the authority attribute may also include other types of attributes, which does not affect the implementation of the embodiment of the present invention.

In the above embodiments, when the authority information is identified, the corresponding authority attribute needs to be identified. During the practical application, it may be specified that the authority attribute is only authorization attribute. In this case, the authority attribute does not need to be identified. Under the situation, the present invention may be implemented through the following embodiment.

(III) Under the situation that the authority attribute does not need to be identified, the authority information is identified by adopting a group attribute row "a=group:".

In this embodiment, the process of identifying the authority information includes the following steps.

Service packet identifying information of a multicast service is identified in semantics of the group attribute row, and service identifying information corresponding to the service packet identifying information is identified in an identification-tag corresponding to the semantics.

A specific form of the group attribute row is group-attribute = "a=group:" semantics *(space identification-tag).

In the embodiment according to the present invention, the service packet identifying information of the multicast service is identified by adopting the semantics, in which the semantics may be a character set or other forms. The service identifying information corresponding to the service packet identifying information is identified by adopting the identification-tag. The identification-tag may be a number, a URL, a URI, a multicast address, a character set, or other forms. After the authority information is identified by adopting the method according to the embodiment of the present invention, the obtained group authority attribute row may particularly be a= group: SP1 channel1 channel2.

The authority information of the group authority attribute row includes a channel 1 and a channel 2 of a service packet 1. The group authority attribute row represents that the subscriber is authorized to watch programs of the channel 1 and the channel 2 of the service packet 1. There may be one or more service identifiers.

In a preferred embodiment of the present invention, when it needs to represent that the subscriber is authorized to watch programs of channels in a plurality of service packets, the authority information may be identified by adopting a plurality of group authority attribute rows in this embodiment. For example, when it needs to represent that the subscriber is authorized to watch the channel 1 and the channel 2 of the service packet 1, and a channel 1 and a channel 2 of a service packet 2, the authority information may be identified by adopting two group authority attribute rows, that is:
a= group: SP 1 channel1 channel2
a= group: SP2 channel1 channel2.

In this embodiment, the following points need to be noted.

(1) When the authority information is identified, besides listing the corresponding service packet identifying information and/or service identifying information one by one according to the above manner, the authority information may be identified in a list or other exemplifying manners.

(2) In this embodiment, the information exemplified in the authority information is information of the services which the subscriber is allowed to watch. During the practical application, it is possible that the subscriber is authorized to watch a plurality of services, and the quality of the services which the subscriber is authorized to watch may be quite large. In this case, the authority information of the subscriber is represented in a manner of excluding the services which the subscriber is not authorized to watch, thereby reducing a length of the authority information. For example, when a certain subscriber is authorized to watch programs of all channels of the service packet 1 except the channel 1 and the channel 2, the authority information thereof may be identified in the following manner, a= group: exclude SP1 channel1 channel2.

(3) When the authority information includes a plurality of service identifying information and/or service packet identifying information, the authority information may be identified in a simplified manner. Taking a plurality of service identifying information as an example, after the authority information is identified in the simplified manner, the obtained group authority attribute row is, a= group:SP1 channel1-channel3, channel4, channel6-channel10.

The authority information in the group authority attribute row includes channels from channel 1 to channel 3, channel 4, and channels from channel 6 to channel 10 in a service packet 1, which represents that the subscriber is authorized to watch programs of channels from the channel 1 to the channel 3, the channel 4, and channels from the channel 6 to the channel 10 in the service packet 1.

The above-mentioned identifying manners are only intended to describe the embodiment of the present invention, without limiting the scope of the embodiment of the present invention.

In the above embodiments, the authority information may be identified by adopting a plurality of attribute rows or group attribute rows, and the specific identifying method may adopt any one of the three identifying methods in the above embodiments.

In the above embodiments, there may be various representation manners of the attribute, value, semantics, and identification-tag in the authority attribute row, which are not limited to the manners described in the embodiments.

II. A method for obtaining authority information

In an embodiment according to the present invention, the method for obtaining the authority information includes the following steps.

An SDP message is parsed to obtain an attribute row or a group attribute row in the SDP message;

And the authority information is obtained from the attribute row or the group attribute row.

In the following, combined with different identifying manners, the method for obtaining the authority information is particularly described.

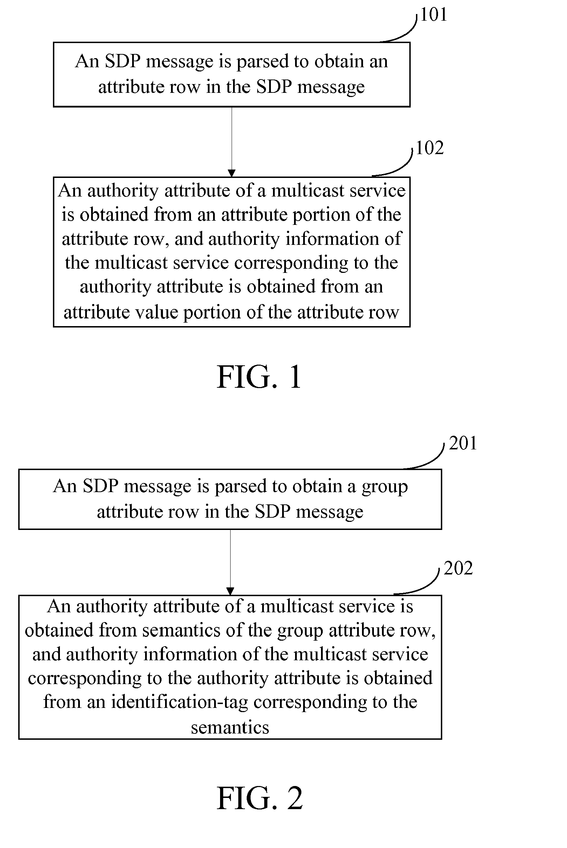

(I) When the authority information is identified by adopting an attribute row "a=", referring to FIG. 1, the method for obtaining the authority information according to the embodiment of the present invention includes the following steps.

In Step 101, an SDP message is parsed to obtain an attribute row in the SDP message.

In Step 102, an authority attribute of a multicast service is obtained from an attribute portion of the attribute row, and authority information of the multicast service corresponding to the authority attribute is obtained from an attribute value portion of the attribute row.

(II) When the authority information is identified by adopting a group attribute row "a=group:", referring to FIG. 2, the method for obtaining the authority information according to the embodiment of the present invention includes the following steps.

In Step 201, an SDP message is parsed to obtain a group attribute row in the SDP message.

In Step 202, an authority attribute of a multicast service is obtained from semantics of the group attribute row, and authority information of the multicast service corresponding to the authority attribute is obtained from an identification-tag corresponding to the semantics.

In the above two embodiments, the authority attribute may be authorization attribute, and definitely may also be other attributes including a prohibited attribute and a restricted attribute, which does not affect the implementation of the embodiments of the present invention. In addition, the service identifying information may be one or a group of service packet identifying information, or one or a group of service identifying information, or a combination of one or a group of service packet identifying information and one or a group of service identifying information.

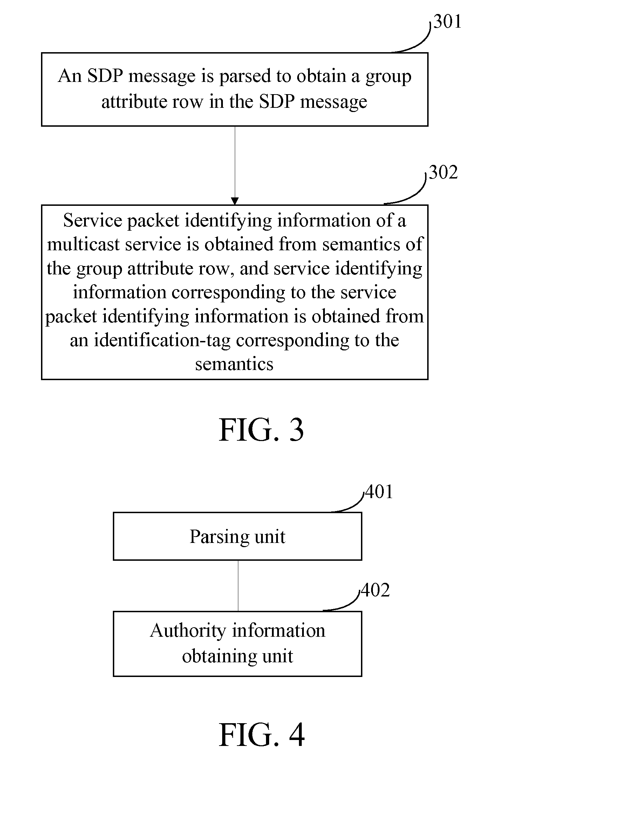

(III) When the authority information is identified by adopting a group attribute row "a=group:" under a situation that the authority attribute does not need to be identified, referring to FIG. 3, the method for obtaining the authority information according to the embodiment of the present invention includes the following steps.

In Step 301, an SDP message is parsed to obtain a group attribute row in the SDP message.

In Step 302, service packet identifying information of a multicast service is obtained from semantics of the group attribute row, and service identifying information corresponding to the service packet identifying information is obtained from an identification-tag corresponding to the semantics.

In this embodiment, there man be information about one or more service identifiers, which does not affect the implementation of the embodiment of the present invention.

In the above embodiments of obtaining the authority information, the authority information may be identified by adopting a plurality of authority attribute rows or a plurality of group authority attribute rows. Under this situation, in the above embodiments of obtaining the authority information, when it is determined that other attribute rows or other group attribute rows for identifying the authority information exist, the method further includes obtaining the authority information from the attribute rows or the group attribute rows where the authority information is not read. The particular obtaining method may be any one of the three methods for obtaining the authority information.

III. A device for obtaining authority information

Referring to FIG. 4, the device for obtaining the authority information according to an embodiment of the present invention includes a parsing unit 401 and an authority information obtaining unit 402.

The parsing unit 401 is adapted to parse an SDP message to obtain an attribute row or a group attribute row in the SDP message.

The authority information obtaining unit 402 is adapted to obtain authority information from the attribute row or the group attribute row.

Particularly, in an embodiment of the present invention, the authority information obtaining unit 402 includes an attribute-row authority attribute obtaining unit and an attribute-row authority information obtaining unit.

The attribute-row authority attribute obtaining unit is adapted to obtain an authority attribute of a multicast service from an attribute portion of the attribute row.

The attribute-row authority information obtaining unit is adapted to obtain authority information of the multicast service corresponding to the authority attribute from an attribute value portion of the attribute row.

In another embodiment of the present invention, the authority information obtaining unit 402 includes a group-attribute-row authority attribute obtaining unit and a group-attribute-row authority information obtaining unit.

The group-attribute-row authority attribute obtaining unit is adapted to obtain an authority attribute of a multicast service from semantics of the group attribute row.

The group-attribute-row authority information obtaining unit is adapted to obtain authority information of the multicast service corresponding to the authority attribute from an identification-tag corresponding to the semantics.

In another embodiment of the present invention, the authority information obtaining unit 402 includes a group-attribute-row service packet identifying information obtaining unit and a group-attribute-row service identifying information obtaining unit.

The group-attribute-row service packet identifying information obtaining unit is adapted to obtain service packet identifying information of a multicast service from semantics in the group attribute row.

The group-attribute-row service identifying information obtaining unit is adapted to obtain service identifying information corresponding to the service packet identifying information from an identification-tag corresponding to the semantics.

The above descriptions are merely preferred embodiments of the present invention. It should be noted by persons of ordinary skill in the art that, various modifications and improvements may be made without departing from the principle of the present invention, which should be construed as falling within the protection scope of the present invention.

## Claims

1. A method for identifying authority information in a session description protocol (SDP), comprising:
identifying an authority attribute of a multicast service in an attribute portion of an attribute row, and identifying authority information of the multicast service corresponding to the authority attribute in an attribute value portion of the attribute row.

2. The method according to claim 1, wherein
the authority information is any of the following information: service packet identifying information, service identifying information or a combination thereof, wherein there are information about one or more service packet identifiers, or information about one or more service identifiers.

3. The method according to claim 1, wherein a character set is adopted as the authority attribute, and a number, a universal resource locator (URL), a universal resource identifier (URI), a multicast address, or a character set is adopted as the authority information.

4. A method for identifying authority information in a session description protocol (SDP), comprising:
identifying an authority attribute of a multicast service in semantics of a group attribute row, and identifying authority information of the multicast service corresponding to the authority attribute in an identification-tag corresponding to the semantics.

5. The method according to claim 4, wherein
the authority information is any of the following information: service packet identifying information, service identifying information or a combination thereof, wherein there are information about one or more service packet identifiers, or information about one or more service identifiers.

6. The method according to claim 4, wherein a character set is adopted as the authority attribute, and a number, a universal resource locator (URL), a universal resource identifier (URI), a multicast address, or a character set is adopted as the authority information.

7. A method for identifying authority information in a session description protocol (SDP), comprising:
identifying service packet identifying information of a multicast service in semantics of a group attribute row, and identifying service identifying information corresponding to the service packet identifying information in an identification-tag corresponding to the semantics.

8. The method according to claim 7, wherein a character set is adopted as the service packet identifying information, and a number, a universal resource locator (URL), a universal resource identifier (URI), a multicast address, or a character set is adopted as the service identifying information.

9. A method for obtaining authority information in a session description protocol (SDP), comprising:
parsing an SDP message to obtain an attribute row or a group attribute row in the SDP message; and
obtaining authority information from the attribute row or the group attribute row.

10. The method according to claim 9, wherein the parsing the SDP message to obtain the attribute row in the SDP message, and the obtaining the authority information from the attribute row further comprise:
obtaining an authority attribute of a multicast service in an attribute portion of the attribute row, and obtaining the authority information of the multicast service corresponding to the authority attribute in an attribute value portion of the attribute row.

11. The method according to claim 9, wherein the parsing the SDP message to obtain the group attribute row in the SDP message, and the obtaining the authority information from the group attribute row further comprise:
obtaining an authority attribute of a multicast service in semantics of the group attribute row, and obtaining the authority information of the multicast service corresponding to the authority attribute in an identification-tag corresponding to the semantics.

12. The method according to claim 9, wherein the parsing the SDP message to obtain the group attribute row in the SDP message, and the obtaining the authority information from the group attribute row further comprise:
obtaining service packet identifying information of a multicast service in semantics of the group attribute row, and obtaining service identifying information corresponding to the service packet identifying information in an identification-tag corresponding to the semantics.

13. A device for obtaining authority information in a session description protocol (SDP), comprising:
a parsing unit, adapted to parse an SDP message to obtain an attribute row or a group attribute row in the SDP message; and
an authority information obtaining unit, adapted to obtain authority information from the attribute row or the group attribute row.

14. The device according to claim 13, wherein the authority information obtaining unit further comprises:
an attribute-row authority attribute obtaining unit, adapted to obtain an authority attribute of a multicast service from an attribute portion of the attribute row; and
an attribute-row authority information obtaining unit, adapted to obtain the authority information of the multicast service corresponding to the authority attribute from an attribute value portion of the attribute row; or
the authority information obtaining unit further comprises:
a group-attribute-row authority attribute obtaining unit, adapted to obtain an authority attribute of a multicast service from semantics of the group attribute row; and
a group-attribute-row authority information obtaining unit, adapted to obtain the authority information of the multicast service corresponding to the authority attribute from an identification-tag corresponding to the semantics; or
the authority information obtaining unit further comprises:
a group-attribute-row service packet identifying information obtaining unit, adapted to obtain service packet identifying information of a multicast service from semantics in the group attribute row; and
a group-attribute-row service identifying information obtaining unit, adapted to obtain service identifying information corresponding to the service packet identifying information from an identification-tag corresponding to the semantics.
